# EUROPEAN PATENT APPLICATION

(11) **EP 4 525 393 A1**
(43) Date of publication of application: **19.03.2025**
(21) Application number: 23819045.8
(22) Date of filing: 05.06.2023
(51) Int. Cl.: H04L 45/00

(54) **MESSAGE CONTROL METHOD AND RELATED DEVICE**

(30) Priority: 06.06.2022 CN 202210627933; 10.08.2022 CN 202210956601
(71) Applicant: Huawei Technologies Co., Ltd., Shenzhen, Guangdong 518129 (CN)
(72) Inventor: DONG, Jie, Shenzhen, Guangdong 518129 (CN)
(74) Representative: MERH-IP Matias Erny Reichl Hoffmann Patentanwälte PartG mbB
(86) International application number: PCT/CN2023/098216
(87) International publication number: WO 2023/236880

(57) **Abstract**

Embodiments of this application disclose a packet control method and a related apparatus. The method includes: A first node sends a first packet to a second node. The first packet carries indication information, and the first packet corresponds to one or more segment lists, where each segment list corresponds to one or more segments segment. The indication information indicates that a network layer of a first set is an underlying network, or the indication information indicates that the network layer of the first set is not an underlying network. The underlying network is a network below a layer 3 network. The first set includes one or more segments. Indication information is added to a first packet, so that the first packet may indicate a network layer of a segment. The second node determines, based on the indication information, a network layer of a first set corresponding to the indication information, so that the second node may select, based on the network layer of the first set, a packet forwarding path. This simplifies network configuration and meets personalized network configuration requirements. This meets service requirements and improves communication performance.

## Description

This application claims priority to Chinese Patent Application No. 202210627933.8, filed with the China National Intellectual Property Administration on June 6, 2022 and entitled "SR POLICY EXTENSION METHOD FOR SUPPORTING SRv6 CROSS-LAYER NETWORK PROGRAMMING, DEVICE, AND SYSTEM" and Chinese Patent Application No. 202210956601.4, filed with the China National Intellectual Property Administration on August 10, 2022 and entitled "PACKET CONTROL METHOD AND RELATED APPARATUS", which are incorporated herein by reference in their entireties.

### TECHNICAL FIELD

This application relates to the field of communication technologies, and in particular, to a packet control method and a related apparatus.

### BACKGROUND

Internet Protocol Version 6-Segment Routing (Internet Protocol Version 6-Segment Routing, IPv6 SR or SRv6) refers to applying a segment routing (segment routing, SR) technology to an IPv6 network. An IPv6 address (128 bits) is used as a representation of a segment identifier (segment ID, SID). When forwarding a data packet, a network device supporting SRv6 queries a local segment identifier table (local SID table) based on a destination address (destination address, DA) in the data packet. When a longest match is found between the destination address of the data packet and any SID in the local segment identifier table, the network device performs, according to a policy related to the SID in the local segment identifier table, an operation corresponding to the policy. For example, the network device may forward the data packet through an outbound interface corresponding to the SID. If no longest match is found between the destination address of the data packet and any SID in the local segment identifier table, the network device queries an IPv6 forwarding table, and performs longest-match forwarding based on the IPv6 forwarding table.

An SR Policy (SR Policy) is an SR traffic engineering mechanism. Usually, an SR Policy includes a headend (headend), a color (color), an endpoint (endpoint), and a segment identifier list indicating a forwarding path. The headend identifies a headend that executes the SR Policy. The color is used for associating the SR with a service attribute like a low delay and high bandwidth, to summarize a service capability of the SR Policy. The endpoint identifies a destination address of the SR Policy. Usually, one SR Policy is determined by using (headend, color, endpoint). For a same headend, one SR Policy may alternatively be determined by using (color, endpoint). The SR Policy may include one or more segment lists (Segment list) to implement functions such as load balancing and multipath backup.

If both an L3 layer (that is, an IP layer network) transmission path and an underlying (a layer below an L3 layer is referred to as an underlying layer in embodiments of this application, for example, an L2 layer or an L1 layer) transmission path exist in a network, hybrid path programming may be performed on the L3 layer transmission path and the underlying transmission path based on SRv6. Based on this, an SRv6 function (function), End.XU SID, is proposed. The End.XU SID indicates a cross-layer network edge node to forward a packet over an underlying transmission path.

The applicant finds through research that a plurality of segment types (Segment Type) are defined in the SR Policy, and the segment type indicates a type of a segment. However, a current segment type cannot identify whether a segment indicates an L3 layer transmission path or an underlying transmission path. In a hybrid path programming scenario, for example, a network includes both an L3 transmission path and an underlying transmission path, or a network includes both an L3 transmission path and a cross-layer transmission path, network configuration is difficult.

### SUMMARY

According to a first aspect, an embodiment of this application provides a packet control method, where the method is applied to a first node, and the method includes:
A first node sends a first packet to a second node. The first packet carries indication information, and the first packet corresponds to one or more segment lists, where each segment list corresponds to one or more segments segment.

The indication information indicates that a network layer of a first set is an underlying network, or the indication information indicates that the network layer of the first set is not an underlying network. The underlying network is a network below a layer 3 network. The first set includes one or more segments.

In this embodiment, the first node may be a control management apparatus, for example, a network controller or another node having a control management function. The second node may be a headend of an SR Policy, or may be a start node of a transmission path. This is not limited in this embodiment of this application. It should be noted that the transmission path in embodiments of this application includes but is not limited to an interface, a link, a tunnel, a channel, or the like.

In addition to a Segment Routing Policy (Segment Routing Policy, SR Policy) based on Internet Protocol Version 6 (Internet Protocol Version 6, IPv6)-Segment Routing (SRv6), embodiments of this application are also applicable to an SR Policy based on segment routing multi-protocol label switching (segment routing multi-protocol label switching, SR-MPLS). This is not limited in this embodiment of this application.

In this embodiment of this application, indication information is added to a first packet, so that the first packet may indicate a network layer of a segment. The second node determines, based on the indication information, a network layer of a first set corresponding to the indication information, so that the second node may select, based on the network layer of the first set, a packet forwarding path. This simplifies network configuration and meets personalized network configuration requirements. This meets service requirements and improves communication performance.

With reference to the first aspect, in a possible implementation of the first aspect, the first set includes one segment.

Specifically, when the first set includes one segment, the second node determines the network layer of the first set based on the indication information in the first packet. In other words, the second node determines a network layer of the segment based on the indication information in the first packet. The network layer of the first set is indicated in a plurality of manners, thereby improving solution implementation flexibility.

Further, when a segment list corresponding to the first set includes only one segment, the second node determines a network layer of the segment list based on the network layer of the first set. When the segment list corresponding to the first set includes a plurality of segments, the second node determines the network layer of the segment list based on network layers of all segments in the segment list.

Further, the second node determines a network layer of one or more first sets based on one or more pieces of indication information, and then determines a network layer of one or more corresponding segment lists based on the network layer of the one or more first sets. The one or more pieces of indication information may be carried in a same first packet, or may be carried in a plurality of first packets. This is not limited in this embodiment of this application.

Further, when a candidate path corresponding to the segment list includes only one segment list, the second node determines a network layer of the candidate path based on a network layer of the segment list. When the candidate path includes a plurality of segment lists, the second node determines the network layer of the candidate path based on network layers of all segment lists in the candidate path.

With reference to the first aspect, in a possible implementation of the first aspect, the first set includes one or more segments, and the one or more segments belong to a same segment list; and
that the indication information indicates that a network layer of a first set is an underlying network, or the indication information indicates that the network layer of the first set is not an underlying network includes: the indication information indicates that a network layer of the segment list is the underlying network; or the indication information indicates that the network layer of the segment list is not the underlying network. The indication information of the first packet may further indicate a network layer of the segment list, thereby improving solution implementation flexibility. A piece of indication information may indicate a network layer of the segment list, thereby saving communication resources.

The indication information of the first packet may indicate a network layer of a segment, or may indicate a network layer of a segment list (all segments in the segment list). When all segments included in a segment list are equal to the first set, that the indication information of the first packet indicates the network layer of the first set is equal to that the indication information of the first packet indicates a network layer of the segment list. In other words, the second node directly determines indication information of the segment list based on the indication information of the first packet.

It may be understood that the indication information of the first packet may further indicate network layers of a plurality of segment lists. This is not limited in this embodiment of this application.

With reference to the first aspect, in a possible implementation of the first aspect, the first set includes one or more segments, the one or more segments belong to one or more segment lists, and the one or more segment lists belong to a same candidate path; and that the indication information indicates that a network layer of a first set is an underlying network, or the indication information indicates that the network layer of the first set is not an underlying network includes: the indication information indicates that a network layer of the candidate path is the underlying network; or the indication information indicates that the network layer of the candidate path is not the underlying network. The indication information of the first packet may further indicate a network layer of the candidate path, thereby improving solution implementation flexibility. A piece of indication information may indicate a network layer of the candidate path, thereby saving communication resources.

Specifically, when the first set includes one or more segments, the indication information of the first packet may further indicate a network layer of a candidate path (all segment lists in the candidate path and all segments in each of the segment lists). Details are described below.

When all segments included in a candidate path (that is, all segment lists included in the candidate path and all segments included in each of the segment lists) are equal to the first set, that the indication information of the first packet indicates the network layer of the first set is equal to that the indication information of the first packet indicates a network layer of the candidate path. In other words, the second node directly determines indication information of the candidate path based on the indication information of the first packet.

It may be understood that the indication information of the first packet may further indicate network layers of a plurality of candidate paths. This is not limited in this embodiment of this application.

It should be noted that a network layer of a candidate path is determined by network layers of all segment lists included in the candidate path.

According to a second aspect, an embodiment of this application provides a packet control method, where the method is applied to a second node, and the method includes: The second node receives a first packet from a first node. The first packet corresponds to one or more segment lists, each segment list corresponds to one or more segments segment, the first packet carries indication information, the indication information indicates that a network layer of a first set is an underlying network, or the indication information indicates that the network layer of the first set is not an underlying network, and the underlying network is a network below a layer 3 network. The second node determines the network layer of the first set based on the first packet. The first set includes one or more segments.

In this embodiment of this application, indication information is added to a first packet, so that the first packet may indicate a network layer of a segment. The second node determines, based on the indication information, a network layer of a first set corresponding to the indication information, so that the second node may select, based on the network layer of the first set, a packet forwarding path. This simplifies network configuration and meets personalized network configuration requirements. This meets service requirements and improves communication performance.

With reference to the second aspect, in a possible implementation of the second aspect, that the second node determines the network layer of the first set based on the first packet includes: The second node determines a network layer of the segment list based on the indication information in the first packet, where the one or more segments included in the first set belong to the segment list.

When all segments included in a segment list are equal to the first set, that the indication information of the first packet indicates the network layer of the first set is equal to that the indication information of the first packet indicates a network layer of the segment list. In other words, the second node directly determines indication information of the segment list based on the indication information of the first packet.

It may be understood that the indication information of the first packet may further indicate network layers of a plurality of segment lists. This is not limited in this embodiment of this application.

An example in which all segments included in a segment list are equal to the first set is used for description.

In a possible implementation, when the second node determines, based on the indication information carried in the first packet, that the network layer of the first set is the underlying network, the second node determines that the network layer of the segment list is the underlying network; when the second node determines, based on the indication information carried in the first packet, that network layers of some segments in the first set are the underlying network, and network layers of some segments in the first set are the underlying network, the second node determines that the network layer corresponding to the segment list is a cross-layer network, where the cross-layer network includes a layer 3 network and the underlying network; and when the second node determines, based on the indication information carried in the first packet, that the network layer of the first set is the layer 3 network, the second node determines that the network layer of the segment list is the layer 3 network.

For example, segment list A includes segment A, segment B, segment C, and segment D. Network layers of segment A and segment B are the underlying network, and network layers of segment C and segment D are the layer 3 network. In this case, a network layer of segment list A is the cross-layer network.

In another possible implementation, when the second node determines, based on the indication information carried in the first packet, that the network layer of the first set is a layer 1 network, the second node determines that the network layer of the segment list is the layer 1 network; when the second node determines, based on the indication information carried in the first packet, that the network layer of the first set is a layer 2 network, the second node determines that the network layer of the segment list is the layer 2 network; and when the second node determines, based on the indication information carried in the first packet, that the network layer of the first set is a layer 3 network, the second node determines that the network layer of the segment list is the layer 3 network. Further, when the second node determines, based on the indication information carried in the first packet, that the network layer of the first set is a layer 1.5 network, the second node determines that the network layer of the segment list is the layer 1.5 network; and when the second node determines, based on the indication information carried in the first packet, that the network layer of the first set is a layer 2.5 network, the second node determines that the network layer of the segment list is the layer 2.5 network.

With reference to the second aspect, in a possible implementation of the second aspect, the method further includes: The second node determines a network layer of a candidate path based on the network layer of the segment list, where the candidate path includes the segment list.

When all segments included in a candidate path (that is, all segment lists included in the candidate path and all segments included in each of the segment lists) are equal to the first set, that the indication information of the first packet indicates the network layer of the first set is equal to that the indication information of the first packet indicates a network layer of the candidate path. In other words, the second node directly determines indication information of the candidate path based on the indication information of the first packet.

It may be understood that the indication information of the first packet may further indicate network layers of a plurality of candidate paths. This is not limited in this embodiment of this application.

It should be noted that a network layer of a candidate path is determined by network layers of all segment lists included in the candidate path. For example, when network layers of all segment lists included in a candidate path are the underlying network, a network layer of the candidate path is the underlying network. When network layers of some segment lists included in the candidate path are the underlying network, and network layers of other segment lists included in the candidate path are not the underlying network, the network layer of the candidate path is the cross-layer network. When the network layers of all the segment lists included in the candidate path are not the underlying network, the network layer of the candidate path is the layer 3 network. For example, candidate path A includes segment list A, segment list B, segment list C, and segment list D. Network layers of segment list A and segment list B are the underlying network, and network layers of segment list C and segment list D are the layer 3 network. In this case, a network layer of candidate path A is the cross-layer network.

In a possible implementation, the second node determines a network layer of a candidate path based on the network layer of the segment list, where the candidate path includes the segment list. A network layer of a candidate path is determined by network layers of all segment lists included in the candidate path. An example in which all segments in all segment lists included in a candidate path are equal to the first set is used for description.

In a possible implementation, when the second node determines, based on the indication information carried in the first packet, that the network layer of the first set is the underlying network, the second node determines that the network layer of the candidate path is the underlying network; when the second node determines, based on the indication information carried in the first packet, that network layers of some segment lists in the first set are the underlying network, and network layers of some segment lists in the first set are the underlying network, the second node determines that the network layer corresponding to the candidate path is a cross-layer network, where the cross-layer network includes a layer 3 network and the underlying network; and when the second node determines, based on the indication information carried in the first packet, that the network layer of the first set is the layer 3 network, the second node determines that the network layer of the candidate path is the layer 3 network.

In another possible implementation, when the second node determines, based on the indication information carried in the first packet, that the network layer of the first set is a layer 1 network, the second node determines that the network layer of the candidate path is the layer 1 network; when the second node determines, based on the indication information carried in the first packet, that the network layer of the first set is a layer 2 network, the second node determines that the network layer of the candidate path is the layer 2 network; and when the second node determines, based on the indication information carried in the first packet, that the network layer of the first set is a layer 3 network, the second node determines that the network layer of the candidate path is the layer 3 network. Further, when the second node determines, based on the indication information carried in the first packet, that the network layer of the first set is a layer 1.5 network, the second node determines that the network layer of the candidate path is the layer 1.5 network; and when the second node determines, based on the indication information carried in the first packet, that the network layer of the first set is a layer 2.5 network, the second node determines that the network layer of the candidate path is the layer 2.5 network.

With reference to the second aspect, in a possible implementation of the second aspect, the method further includes: The second node determines a routing policy based on the network layer of the first set. The second node controls packet forwarding of the second node according to the routing policy.

The routing policy may indicate packet forwarding, that is, the second node controls, according to the routing policy, packet forwarding of the second node. In a possible implementation, for a service having a low latency requirement, the underlying network is preferred for a related packet of the service. For example, the second node determines that the network layer of segment list A is the underlying network, and the network layer of segment list B is the layer 3 network. The second node needs to process a related packet of service A, and service A has a characteristic of a low latency requirement. Therefore, the second node selects segment list A as a packet forwarding path of service A.

In another possible implementation, for a service having no latency requirement or a service having a high latency requirement, the second node preferentially selects a transmission path of the layer 3 network to forward a packet of the service, to reserve a transmission path resource of the underlying network. The transmission path resource of the underlying network is provided for a low latency service, to ensure that a latency requirement of the low latency service is met.

Optionally, after the second node determines the network layer of the first set, the second node may check the first set. Specifically, the second node determines the network layer of the first set based on the indication information of the first packet, and the second node detects an actual network layer of the first set. Then, the second node checks whether the network layer indicated by the indication information is consistent with the actually detected network layer.

With reference to the first aspect or the second aspect, in a possible implementation of the first aspect or the second aspect, the first packet is a path computation element communication protocol PCEP packet, or the first packet is a border gateway protocol BGP packet. It should be noted that an implementation of the first packet is not limited in this embodiment of this application, and the first packet may alternatively be a packet of another protocol, for example, Network Configuration Protocol (Network Configuration Protocol, NETCONF). The first packet has a plurality of implementations, thereby improving solution implementation flexibility.

With reference to the first aspect or the second aspect, in a possible implementation of the first aspect or the second aspect, when the first packet is the border gateway protocol BGP packet, the indication information is located in a segment sub-type length value Segment Sub-TLV in the first packet. The indication information of the first packet has a plurality of implementations, thereby improving solution implementation flexibility.

With reference to the first aspect or the second aspect, in a possible implementation of the first aspect or the second aspect, the indication information is located in a flags Flags field of the Segment Sub-TLV. The indication information of the first packet has a plurality of implementations, thereby improving solution implementation flexibility.

With reference to the first aspect or the second aspect, in a possible implementation of the first aspect or the second aspect, when the first packet is the path computation element communication protocol PCEP packet, the indication information is located in a segment routing-explicit routing object sub-object SR-ERO sub-Object of the first packet. The indication information of the first packet has a plurality of implementations, thereby improving solution implementation flexibility.

With reference to the first aspect or the second aspect, in a possible implementation of the first aspect or the second aspect, the indication information is located in a flags Flags field of the SR-ERO sub-Object. The indication information of the first packet has a plurality of implementations, thereby improving solution implementation flexibility.

With reference to the first aspect or the second aspect, in a possible implementation of the first aspect or the second aspect, when the first packet is the border gateway protocol BGP packet, the indication information is located in a type Type field of a segment sub-type length value Segment Sub-TLV in the first packet. The indication information of the first packet has a plurality of implementations, thereby improving solution implementation flexibility.

With reference to the first aspect or the second aspect, in a possible implementation of the first aspect or the second aspect, when the first packet is the path computation element communication protocol PCEP packet, the indication information is located in a node or adjacency identifier type NT field of the first packet. The indication information of the first packet has a plurality of implementations, thereby improving solution implementation flexibility.

With reference to the first aspect or the second aspect, in a possible implementation of the first aspect or the second aspect, when the indication information indicates that the network layer corresponding to the first set is the underlying network, the first packet further includes a first field and a second field, where the first field indicates an address of a headend of a transmission path corresponding to the first set, a type of the address includes IPv4 or IPv6, and the second field indicates the transmission path corresponding to the first set. The indication information of the first packet has a plurality of implementations, thereby improving solution implementation flexibility.

With reference to the first aspect or the second aspect, in a possible implementation of the first aspect or the second aspect, the transmission path corresponding to the first set includes an interface corresponding to the first set, a link corresponding to the first set, a tunnel corresponding to the first set, or a channel corresponding to the first set.

With reference to the first aspect or the second aspect, in a possible implementation of the first aspect or the second aspect, the first field and the second field are located in a segment routing-explicit routing object sub-object SR-ERO sub-Object of the first packet. The indication information of the first packet has a plurality of implementations, thereby improving solution implementation flexibility.

With reference to the first aspect or the second aspect, in a possible implementation of the first aspect or the second aspect, the first field and the second field are located in a node or adjacency identifier NAI field of the SR-ERO sub-Object. The indication information of the first packet has a plurality of implementations, thereby improving solution implementation flexibility.

With reference to the first aspect or the second aspect, in a possible implementation of the first aspect or the second aspect, the first field and the second field are located in a value value field of the segment sub-type length value Segment Sub-TLV in the first packet. The indication information of the first packet has a plurality of implementations, thereby improving solution implementation flexibility.

With reference to the first aspect or the second aspect, in a possible implementation of the first aspect or the second aspect, that the indication information indicates that the network layer of the first set is an underlying network includes:
the indication information indicates that the network layer of the first set is a layer 2 network; or
the indication information indicates that the network layer of the first set is a layer 1 network; or
the indication information indicates that the network layer of the first set is a layer 1.5 network; or
the indication information indicates that the network layer of the first set is a layer 2.5 network.

With reference to the first aspect or the second aspect, in a possible implementation of the first aspect or the second aspect, that the indication information indicates that the network layer of the first set is not an underlying network includes:
the indication information indicates that the network layer of the first set is a layer 3 network.

According to a third aspect, an embodiment of this application provides a communication apparatus, where the communication apparatus is used in a first node, and the communication apparatus includes:
a transceiver module, configured to send a first packet to a second node, where the first packet carries indication information;
the first packet corresponds to one or more segment lists, where each segment list corresponds to one or more segments segment;
the indication information indicates that a network layer of a first set is an underlying network, or the indication information indicates that the network layer of the first set is not an underlying network; and
the underlying network is a network below a layer 3 network, and the first set includes one or more segments.

In a possible implementation, the first set includes one segment.

In a possible implementation, the first set includes one or more segments, and the one or more segments belong to a same segment list; and
that the indication information indicates that a network layer of a first set is an underlying network, or the indication information indicates that the network layer of the first set is not an underlying network includes:
the indication information indicates that a network layer of the segment list is the underlying network; or
the indication information indicates that the network layer of the segment list is not the underlying network.

In a possible implementation, the first set includes one or more segments, the one or more segments belong to one or more segment lists, and the one or more segment lists belong to a same candidate path; and
that the indication information indicates that a network layer of a first set is an underlying network, or the indication information indicates that the network layer of the first set is not an underlying network includes:
the indication information indicates that a network layer of the candidate path is the underlying network; or
the indication information indicates that the network layer of the candidate path is not the underlying network.

In a possible implementation, the first packet is a path computation element communication protocol PCEP packet, or the first packet is a border gateway protocol BGP packet.

In a possible implementation, when the first packet is the border gateway protocol BGP packet, the indication information is located in a segment sub-type length value Segment Sub-TLV in the first packet.

In a possible implementation, the indication information is located in a flags Flags field of the Segment Sub-TLV.

In a possible implementation, when the first packet is the path computation element communication protocol PCEP packet, the indication information is located in a segment routing-explicit routing object sub-object SR-ERO sub-Object of the first packet.

In a possible implementation, the indication information is located in a flags Flags field of the SR-ERO sub-Object.

In a possible implementation, when the first packet is the border gateway protocol BGP packet, the indication information is located in a type Type field of a segment sub-type length value Segment Sub-TLV in the first packet.

In a possible implementation, when the first packet is the path computation element communication protocol PCEP packet, the indication information is located in a node or adjacency identifier type NT field of the first packet.

In a possible implementation, when the indication information indicates that the network layer corresponding to the first set is the underlying network, the first packet further includes a first field and a second field, where the first field indicates an address of a headend of a transmission path corresponding to the first set, a type of the address includes IPv4 or IPv6, and the second field indicates the transmission path corresponding to the first set.

In a possible implementation, the transmission path corresponding to the first set includes an interface corresponding to the first set, a link corresponding to the first set, a tunnel corresponding to the first set, or a channel corresponding to the first set.

In a possible implementation, the first field and the second field are located in a segment routing-explicit routing object sub-object SR-ERO sub-Object of the first packet.

In a possible implementation, the first field and the second field are located in a node or adjacency identifier NAI field of the SR-ERO sub-Object.

In a possible implementation, the first field and the second field are located in a value value field of the segment sub-type length value Segment Sub-TLV in the first packet.

In a possible implementation, the indication information indicates that the network layer of the first set is a layer 2 network; or
the indication information indicates that the network layer of the first set is a layer 1 network; or
the indication information indicates that the network layer of the first set is a layer 1.5 network; or
the indication information indicates that the network layer of the first set is a layer 2.5 network.

In a possible implementation, that the indication information indicates that the network layer of the first set is not an underlying network includes:
the indication information indicates that the network layer of the first set is a layer 3 network.

According to a fourth aspect, an embodiment of this application provides a communication apparatus, where the communication apparatus is used in a second node, and the communication apparatus includes:
a transceiver module, configured to receive a first packet from a first node, where
the first packet corresponds to one or more segment lists, each segment list corresponds to one or more segments segment, the first packet carries indication information, the indication information indicates that a network layer of a first set is an underlying network, or the indication information indicates that the network layer of the first set is not an underlying network, and the underlying network is a network below a layer 3 network; and
a processing module, configured to determine the network layer of the first set based on the first packet, where the first set includes one or more segments.

In a possible implementation, the processing module is further configured to determine a network layer of a segment list based on the indication information in the first packet, where the one or more segments included in the first set belong to the segment list.

In a possible implementation, the processing module is further configured to determine a network layer of a candidate path based on the network layer of the segment list, where the candidate path includes the segment list.

In a possible implementation, the processing module is further configured to: when determining, based on the indication information carried in the first packet, that the network layer of the first set is the underlying network, determine, that the network layer of the segment list is the underlying network;
the processing module is further configured to: when determining, based on the indication information carried in the first packet, that network layers of some segments in the first set are the underlying network, and network layers of some segments in the first set are the underlying network, determine that the network layer corresponding to the segment list is a cross-layer network, where the cross-layer network includes a layer 3 network and the underlying network; and
the processing module is further configured to: when determining, based on the indication information carried in the first packet, that the network layer of the first set is the layer 3 network, determine that the network layer of the segment list is the layer 3 network.

In a possible implementation, the processing module is further configured to: when determining, based on the indication information carried in the first packet, that the network layer of the first set is a layer 1 network, determine that the network layer of the segment list is the layer 1 network;
the processing module is further configured to: when determining, based on the indication information carried in the first packet, that the network layer of the first set is a layer 2 network, determine that the network layer of the segment list is the layer 2 network; and
the processing module is further configured to: when determining, based on the indication information carried in the first packet, that the network layer of the first set is a layer 3 network, determine that the network layer of the segment list is the layer 3 network.

In a possible implementation, the processing module is further configured to: when network layers of all of the segment lists included in the candidate path are the underlying network, determine that the network layer of the candidate path is the underlying network;
the processing module is further configured to: when network layers of some of the segment lists included in the candidate path are the underlying network, and some of the segment lists included in the candidate path are not the underlying network, determine that the network layer of the candidate path is the cross-layer network, where the cross-layer network includes the layer 3 network and the underlying network; and
the processing module is further configured to: when the network layers of all of the segment lists included in the candidate path are not the underlying network, determine that the network layer of the candidate path is the layer 3 network.

In a possible implementation, the processing module is further configured to: when network layers of all of the segment lists included in the candidate path are the layer 1 network, determine that the network layer of the candidate path is the layer 1 network;
the processing module is further configured to: when the network layers of all of the segment lists included in the candidate path are the layer 2 network, determine that the network layer of the candidate path is the layer 2 network; and
the processing module is further configured to: when the network layers of all of the segment lists included in the candidate path are the layer 3 network, determine that the network layer of the candidate path is the layer 3 network.

In a possible implementation, the processing module is further configured to determine a routing policy based on the network layer of the first set; and
the processing module is further configured to control packet forwarding of the second node according to the routing policy.

According to a fifth aspect, an embodiment of this application provides a communication apparatus, where the communication apparatus is configured for a first node, and the communication apparatus includes a memory and a processor. The memory includes instructions, and the processor is configured to perform any implementation of the first aspect.

The communication apparatus includes:
a processor, configured to send a first packet to a second node, where the first packet carries indication information;
the first packet corresponds to one or more segment lists, where each segment list corresponds to one or more segments segment;
the indication information indicates that a network layer of a first set is an underlying network, or the indication information indicates that the network layer of the first set is not an underlying network; and
the underlying network is a network below a layer 3 network, and the first set includes one or more segments.

In a possible implementation, the first set includes one segment.

In a possible implementation, the first set includes one or more segments, and the one or more segments belong to a same segment list; and
that the indication information indicates that a network layer of a first set is an underlying network, or the indication information indicates that the network layer of the first set is not an underlying network includes:
the indication information indicates that a network layer of the segment list is the underlying network; or
the indication information indicates that the network layer of the segment list is not the underlying network.

In a possible implementation, the first set includes one or more segments, the one or more segments belong to one or more segment lists, and the one or more segment lists belong to a same candidate path; and
that the indication information indicates that a network layer of a first set is an underlying network, or the indication information indicates that the network layer of the first set is not an underlying network includes:
the indication information indicates that a network layer of the candidate path is the underlying network; or
the indication information indicates that the network layer of the candidate path is not the underlying network.

In a possible implementation, the first packet is a path computation element communication protocol PCEP packet, or the first packet is a border gateway protocol BGP packet.

In a possible implementation, when the first packet is the border gateway protocol BGP packet, the indication information is located in a segment sub-type length value Segment Sub-TLV in the first packet.

In a possible implementation, the indication information is located in a flags Flags field of the Segment Sub-TLV.

In a possible implementation, when the first packet is the path computation element communication protocol PCEP packet, the indication information is located in a segment routing-explicit routing object sub-object SR-ERO sub-Object of the first packet.

In a possible implementation, the indication information is located in a flags Flags field of the SR-ERO sub-Object.

In a possible implementation, when the first packet is the border gateway protocol BGP packet, the indication information is located in a type Type field of a segment sub-type length value Segment Sub-TLV in the first packet.

In a possible implementation, when the first packet is the path computation element communication protocol PCEP packet, the indication information is located in a node or adjacency identifier type NT field of the first packet.

In a possible implementation, when the indication information indicates that the network layer corresponding to the first set is the underlying network, the first packet further includes a first field and a second field, where the first field indicates an address of a headend of a transmission path corresponding to the first set, a type of the address includes IPv4 or IPv6, and the second field indicates the transmission path corresponding to the first set.

In a possible implementation, the transmission path corresponding to the first set includes an interface corresponding to the first set, a link corresponding to the first set, a tunnel corresponding to the first set, or a channel corresponding to the first set.

In a possible implementation, the first field and the second field are located in a segment routing-explicit routing object sub-object SR-ERO sub-Object of the first packet.

In a possible implementation, the first field and the second field are located in a node or adjacency identifier NAI field of the SR-ERO sub-Object.

In a possible implementation, the first field and the second field are located in a value value field of the segment sub-type length value Segment Sub-TLV in the first packet.

In a possible implementation, the indication information indicates that the network layer of the first set is a layer 2 network; or
the indication information indicates that the network layer of the first set is a layer 1 network; or
the indication information indicates that the network layer of the first set is a layer 1.5 network; or
the indication information indicates that the network layer of the first set is a layer 2.5 network.

In a possible implementation, that the indication information indicates that the network layer of the first set is not an underlying network includes:
the indication information indicates that the network layer of the first set is a layer 3 network.

According to a sixth aspect, an embodiment of this application provides a communication apparatus, where the communication apparatus is configured for a second node, and the communication apparatus includes a memory and a processor. The memory includes instructions, and the processor is configured to perform any implementation of the second aspect. The communication apparatus includes:
a processor, configured to receive a first packet from a first node, where
the first packet corresponds to one or more segment lists, each segment list corresponds to one or more segments segment, the first packet carries indication information, the indication information indicates that a network layer of a first set is an underlying network, or the indication information indicates that the network layer of the first set is not an underlying network, and the underlying network is a network below a layer 3 network; and
the processor is configured to determine the network layer of the first set based on the first packet, where the first set includes one or more segments.

In a possible implementation, the processor is further configured to determine a network layer of a segment list based on the indication information in the first packet, where the one or more segments included in the first set belong to the segment list.

In a possible implementation, the processor is further configured to determine a network layer of a candidate path based on the network layer of the segment list, where the candidate path includes the segment list.

In a possible implementation, the processor is further configured to: when determining, based on the indication information carried in the first packet, that the network layer of the first set is the underlying network, determine, that the network layer of the segment list is the underlying network;
the processor is further configured to: when determining, based on the indication information carried in the first packet, that network layers of some segments in the first set are the underlying network, and network layers of some segments in the first set are the underlying network, determine that the network layer corresponding to the segment list is a cross-layer network, where the cross-layer network includes a layer 3 network and the underlying network; and
the processor is further configured to: when determining, based on the indication information carried in the first packet, that the network layer of the first set is the layer 3 network, determine that the network layer of the segment list is the layer 3 network.

In a possible implementation, the processor is further configured to: when determining, based on the indication information carried in the first packet, that the network layer of the first set is a layer 1 network, determine that the network layer of the segment list is the layer 1 network;
the processor is further configured to: when determining, based on the indication information carried in the first packet, that the network layer of the first set is a layer 2 network, determine that the network layer of the segment list is the layer 2 network; and
the processor is further configured to: when determining, based on the indication information carried in the first packet, that the network layer of the first set is a layer 3 network, determine that the network layer of the segment list is the layer 3 network.

In a possible implementation, the processor is further configured to: when network layers of all of the segment lists included in the candidate path are the underlying network, determine that the network layer of the candidate path is the underlying network;
the processor is further configured to: when network layers of some of the segment lists included in the candidate path are the underlying network, and some of the segment lists included in the candidate path are not the underlying network, determine that the network layer of the candidate path is the cross-layer network, where the cross-layer network includes the layer 3 network and the underlying network; and
the processor is further configured to: when the network layers of all of the segment lists included in the candidate path are not the underlying network, determine that the network layer of the candidate path is the layer 3 network.

In a possible implementation, the processor is further configured to: when network layers of all of the segment lists included in the candidate path are the layer 1 network, determine that the network layer of the candidate path is the layer 1 network;
the processor is further configured to: when the network layers of all of the segment lists included in the candidate path are the layer 2 network, determine that the network layer of the candidate path is the layer 2 network; and
the processor is further configured to: when the network layers of all of the segment lists included in the candidate path are the layer 3 network, determine that the network layer of the candidate path is the layer 3 network.

In a possible implementation, the processor is further configured to determine a routing policy based on the network layer of the first set; and
the processor is further configured to control packet forwarding of the second node according to the routing policy.

According to a seventh aspect, a communication system is provided. The communication system includes the communication apparatus according to the second aspect or the third aspect.

An eighth aspect of this application provides a computer storage medium. The computer storage medium may be non-volatile. The computer storage medium stores computer-readable instructions. When the computer-readable instructions are executed by a processor, the method according to any one of the implementations of the first aspect or the second aspect is implemented.

A ninth aspect of this application provides a computer program product including instructions. When the computer program product runs on a computer, the computer is enabled to perform the method according to any one of the implementations of the first aspect or the second aspect.

A tenth aspect of this application provides a chip system. The chip system includes a processor and an interface circuit, configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete device.

An eleventh aspect of this application provides a communication apparatus, including a communication interface; and
a processor, connected to the communication interface, where based on the communication interface and the processor, the communication apparatus is enabled to perform the method according to the first aspect or the second aspect.

A twelfth aspect of this application provides a communication apparatus, including: the communication apparatus includes:
a memory, including instructions; and
a processor, where when the processor executes the instructions, a communication interface;
the communication apparatus is enabled to perform the method according to any one of the first aspect and/or the second aspect.

### BRIEF DESCRIPTION OF DRAWINGS

FIG. 1 is a diagram of a communication scenario;
FIG. 2 is a diagram of an embodiment of a packet control method according to an embodiment of this application;
FIG. 3 is a diagram of a segment-segment list-candidate path relationship;
FIG. 4 is a diagram of a Segment Sub-TLV according to an embodiment of this application;
FIG. 5 is a diagram of a Flags field of a Segment Sub-TLV;
FIG. 6 is a diagram of indication information according to an embodiment of this application;
FIG. 7 is a diagram of indication information according to an embodiment of this application;
FIG. 8 is another diagram of a Segment Sub-TLV according to an embodiment of this application;
FIG. 9 is a diagram of an SR-ERO sub-Object according to an embodiment of this application;
FIG. 10 is another diagram of indication information according to an embodiment of this application;
FIG. 11 is still another diagram of indication information according to an embodiment of this application;
FIG. 12a is yet another diagram of indication information according to an embodiment of this application;
FIG. 12b is another diagram of an SR-ERO sub-Object according to an embodiment of this application;
FIG. 13 is a diagram of a structure of a communication apparatus 1300 according to an embodiment of this application;
FIG. 14 is a diagram of a structure of a communication apparatus 1400 according to an embodiment of this application;
FIG. 15 is a diagram of a structure of a communication apparatus 1500 according to an embodiment of this application; and
FIG. 16 is a diagram of a network system 1600 according to an embodiment of this application.

### DESCRIPTION OF EMBODIMENTS

Embodiments of this application are described. It is clear that the described embodiments are merely a part of but not all of embodiments of this application. A person of ordinary skill in the art may learn that, with emergence of a new application scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have" and any variant thereof mean to cover the non-exclusive inclusion, for example, a process, method, system, product, or device that includes a list of steps or modules is not necessarily limited to those steps or modules expressly listed, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

First, some technical concepts in embodiments of this application are described.

Segment routing (segment routing, SR) is a protocol designed based on source routing to forward a data packet on a network. The SR divides a network path into segments and allocates segment identifiers (segment IDs, SIDs) to the segments and network nodes. A segment list (SID List, also referred to as a label stack in SR-MPLS) may be obtained by sorting the SIDs in order. The SID list may indicate a forwarding path. In the SR technology, a headend adds a label stack to the data packet, and a transit node may forward the data packet to a next node based on the label stack until the data packet arrives at a destination node. For example, <SID 1, SID 2, SID 3> is inserted into a packet header of a data packet, and the data packet is first forwarded to a node corresponding to SID 1, then forwarded to a node corresponding to SID 2, and then forwarded to a node corresponding to SID 3. The SR-MPLS is short for segment routing multi-protocol label switching (segment routing multi-protocol label switching).

Internet Protocol Version 6 (Internet Protocol Version 6, IPv6)-Segment Routing (SRv6): the SR technology is applied to an IPv6 network. An IPv6 address (128 bits) is used as a representation of a SID. When forwarding a data packet, a network device supporting SRv6 queries a local segment identifier table (local SID table) based on a destination address (destination address, DA) in the data packet. When a longest match is found between the destination address of the data packet and any SID in the local segment identifier table, the network device performs, according to a policy related to the SID in the local segment identifier table, an operation corresponding to the policy. For example, the network device may forward the data packet through an outbound interface corresponding to the SID. If no longest match is found between the destination address of the data packet and any SID in the local segment identifier table, the network device queries an IPv6 forwarding table, and performs longest-match forwarding based on the IPv6 forwarding table.

An SR Policy (SR Policy) is an SR traffic engineering mechanism. Usually, an SR Policy includes a headend (headend), a color (color), an endpoint (endpoint), and a segment identifier list indicating a forwarding path. The headend identifies a headend that executes the SR Policy. The color is used for associating the SR with a service attribute like a low delay and high bandwidth, to summarize a service capability of the SR Policy. The endpoint identifies a destination address of the SR Policy. Usually, one SR Policy is determined by using (headend, color, endpoint). For a same headend, one SR Policy may alternatively be determined by using (color, endpoint). The SR Policy may include one or more segment identifier lists, to implement functions such as load balancing and multipath backup. When forwarding a packet, the headend may determine, according to the SR Policy, a segment identifier list corresponding to the packet, to determine a forwarding path for forwarding the packet, and encapsulate the segment identifier list into the packet to indicate a candidate path of the packet. The candidate path includes an explicit candidate path and a dynamic candidate path.

### Border gateway protocol (border gateway protocol, BGP)

Any two nodes in the network may establish a neighbor relationship by using BGP. The neighbor relationship is also referred to as a BGP neighbor relationship or a BGP peer (BGP peer) relationship. A BGP peer relationship between A and B indicates that A is a BGP peer of B, and B is a BGP peer of A. For a specific establishment process, refer to an agreement of the request for comments (request for comments, RFC) 7432 protocol. Details are not described herein again.

### path computation element communication protocol (Path Computation Element Communication Protocol, PCEP)

A path computation element server (path computation element server, PCE Server) is responsible for path computation on a network, and the PCE Server is responsible for computing, according to a request of a path computation client (path computation client, PCC), an optimal path that meets constraints. The PCE Server uses a PCEP packet to communicate with the PCC and a PCE Server in another domain. After a second node (that is, a headend) serves as a PCC and sends a path computation request to a controller (PCE Server), the second node receives a control packet (the control packet carries a computation result) from the controller and establishes a label switch path (label switch path, LSP) based on the control packet.

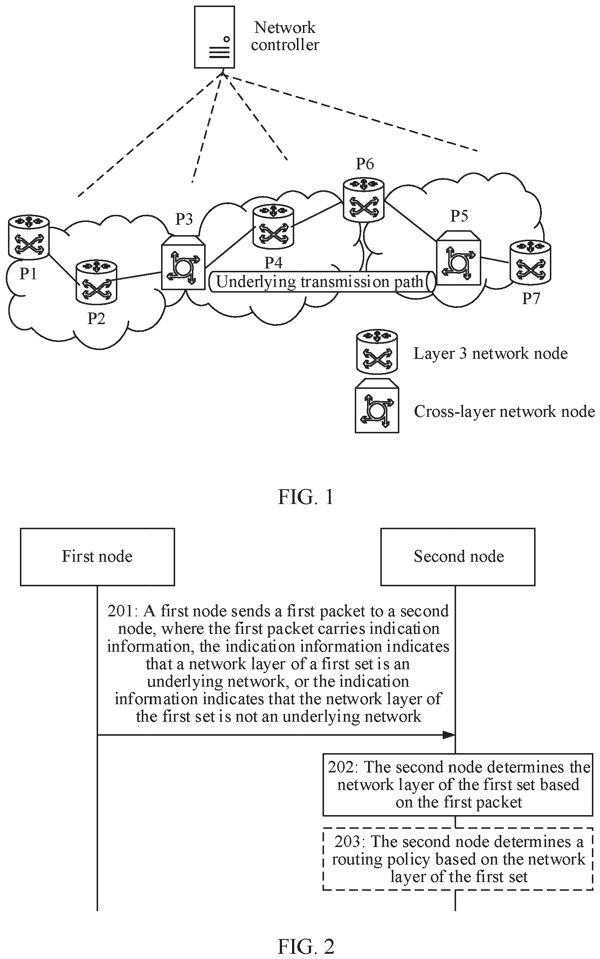

FIG. 1 is a diagram of a communication scenario. The communication scenario includes nodes P1, P2, P3, P4, P5, P6, and P7, where nodes P1, P2, P4, P6, and P7 are layer 3 network nodes, and nodes P3 and P5 are cross-layer network edge nodes. A cross-layer network in embodiments of this application means that a network device included in the network supports a multi-layer network technology. A multi-layer network includes but is not limited to: a layer 1 (layer 1, L1) network, a layer 2 (layer 2, L2) network, a layer 3 (layer 3, L3) network, a layer 1.5 network, or a layer 2.5 network.

For example, an optical layer transmission path is a layer 1 network connection.

The cross-layer network means that a plurality of networks with different layers are included. For example, a cross-layer network transmission path (also referred to as a cross-layer transmission path) includes a layer 3 network transmission path (also referred to as a layer 3 transmission path), and also includes an underlying network transmission path (also referred to as an underlying transmission path). In embodiments of this application, a network below the layer 3 network is referred to as an underlying network. For example, the underlying network includes a layer 1 network and/or a layer 2 network. For example, a cross-layer network transmission path includes a layer 3 network transmission path and a layer 2 network transmission path. The layer 3 network transmission path may be a logical link, and the layer 2 network transmission path may be a path including a multi-hop node.

For example, SRv6 cross-layer network programming is described with reference to FIG. 1. In FIG. 1, an underlying transmission path is established between nodes P3 and P5. Currently, an SRv6 function (function), "End.XU SID", is defined. The End.XU SID indicates a cross-layer network edge node to forward a packet over an underlying transmission path.

A layer 3 network node and a cross-layer network edge node in the network use the interior gateway protocol (Interior Gateway Protocol, IGP) or border gateway protocol link state (Border Gateway Protocol Link State, BGP-LS) protocol to advertise SRv6 SIDs to other network nodes and report the SRv6 SIDs to a network controller. The network controller or the headend (for example, P1) of the SR Policy uses the SRv6 SID of the layer 3 network and the End.XU SID that indicates the underlying transmission path to arrange a segment list (SID list) of a cross-layer transmission path from the headend of the SR Policy (referred to as a headend for short below) to a tail node of the SR Policy (referred to as a tail node for short below). The headend (for example, P1 in FIG. 1) is encapsulated into a packet by using a segment list of a cross-layer transmission path, and indicates, by using the segment list of the cross-layer transmission path, to forward the packet over the cross-layer transmission path. The packet may be a data packet.

It should be noted that the transmission path in embodiments of this application includes but is not limited to an interface, a link, a tunnel, a channel, or the like.

The applicant finds through research that a plurality of segment types (Segment Type) are defined in the SR Policy, and the segment type indicates a type of a segment. However, a current segment type cannot identify whether the transmission path is a layer 3 transmission path or an underlying transmission path. In a hybrid path programming scenario, for example, a network includes both the layer 3 transmission path and the underlying transmission path, or the network includes both the layer 3 transmission path and a cross-layer transmission path, network configuration is difficult. The SR Policy is mainly used for transmission path programming on a layer 3 network, and therefore does not support transmission path programming on a cross-layer network.

Specifically, current segment types: Type E, Type G, and Type J are used as an example for description.

Segment type Type E: IPv4 prefix with local interface ID (IPv4 Prefix with Local Interface ID).

Segment type Type G: IPv6 prefix and interface ID for link endpoints as local, remote pair for SR-MPLS (IPv6 Prefix and Interface ID for link endpoints as Local, Remote pair for SR-MPLS).

Segment type Type J: IPv6 prefix and interface ID for link endpoints as local, remote pair for SRv6 (IPv6 Prefix and Interface ID for link endpoints as Local, remote pair for SRv6).

It can be learned that, after receiving segment list information including the foregoing segment types: Type E, Type G, or Type J, the headend of the SR Policy cannot determine a network layer of the segment (segment), and therefore cannot check the segment. For example, segment-A (segment-A) is used to identify underlying interface-A, that is, a network layer of segment-A is an underlying network, and a segment type of segment list-A (segment list-A includes segment-A) indicates that a network layer of segment list-A is a layer 3 network. Therefore, the network layer of segment-A is inconsistent with the network layer of segment list-A. The current headend cannot check the inconsistency.

Based on this, an embodiment of this application provides a packet control method. Indication information is added to a first packet, so that the first packet may indicate a network layer of a segment. The second node determines, based on the indication information, a network layer of a first set corresponding to the indication information, so that the second node may select, based on the network layer of the first set, a packet forwarding path. In addition, when the first set includes one segment, the second node performs validity check on the path based on the network layer of the first set. This simplifies network configuration and meets personalized network configuration requirements. This meets service requirements and improves communication performance.

The following describes embodiments of this application with reference to the accompanying drawings. It should be noted that embodiments of this application are also applicable to an SR-MPLS-based SR Policy in addition to an SRv6-based SR Policy. This is not limited in this embodiment of this application. FIG. 2 is a diagram of an embodiment of a packet control method according to an embodiment of this application. A packet control method proposed in this embodiment of this application includes the following steps.

201: A first node sends a first packet to a second node, where the first packet carries indication information, the indication information indicates that a network layer of a first set is an underlying network, or the indication information indicates that the network layer of the first set is not an underlying network.

In this embodiment, the first node may be a control management apparatus, for example, a network controller in FIG. 1, or another node having a control management function, for example, a forwarding node in a network, and the forwarding node has the control management function. The second node may be a headend of an SR Policy, or may be a start node of a transmission path. This is not limited in this embodiment of this application.

The first node sends a first packet to the second node, where the first packet carries indication information, the indication information indicates that a network layer of a first set is the underlying network, or the indication information indicates that the network layer of the first set is not the underlying network. The first packet corresponds to one or more segment lists (segment list), where each segment list corresponds to one or more segments (segment).

In a possible implementation, the first packet includes related information of one or more segment lists. For example, when the first packet is a BGP packet, a route attribute (for example, a tunnel encapsulation attribute) of an update (update) message of the BGP packet carries related information of a segment list. In other words, the related information of the segment list included in the first packet is recorded in the update message. For another example, when the first packet is a PCEP packet, related information of a segment list is carried in a segment routing-explicit routing object sub-object SR-ERO sub-Object. Specifically, each SR-ERO sub-Object included in the first packet corresponds to a segment, and a plurality of SR-ERO sub-Objects correspond to a segment list. For still another example, when the first packet is a PCEP packet, related information of a segment list is carried in an SRv6-ERO sub-Object. Specifically, each SRv6-ERO sub-Object included in the first packet corresponds to a segment, and a plurality of SRv6-ERO sub-Objects correspond to a segment list.

The first set includes one or more segments (segment).

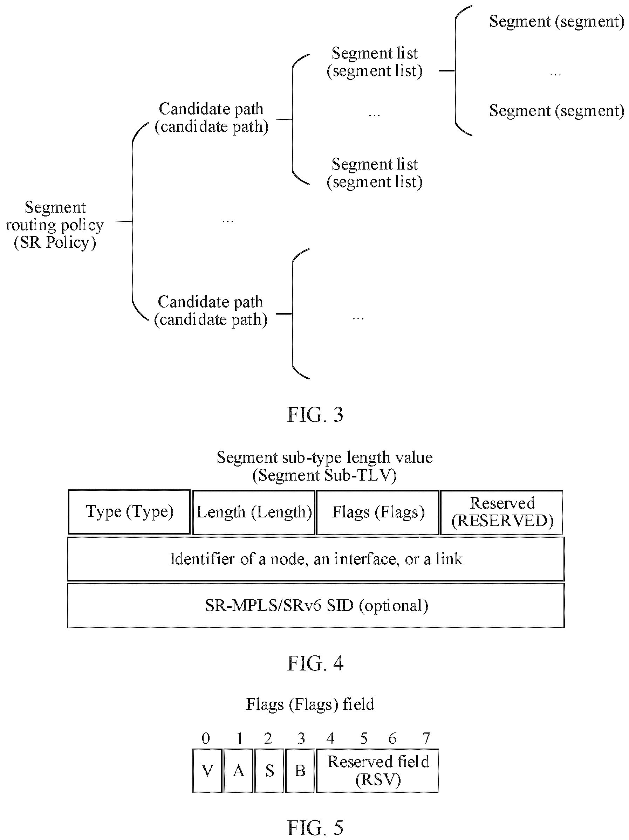

In a possible implementation, if the first set includes one segment, the indication information indicates a network layer of the first set (one segment). The second node determines the network layer of the first set based on the indication information in the first packet. Optionally, the second node determines a network layer of a segment list (the segment list includes the first set) based on one or more pieces of the indication information. Optionally, the second node determines a network layer of a candidate path (candidate path) based on the network layer of the segment list (segment list). For ease of understanding, FIG. 3 is a diagram of a segment-segment list-candidate path relationship. The SR Policy is used as an example for description. One SR Policy may include one or more candidate paths, each candidate path may include one or more segment lists, and each segment list includes one or more segments.

Further, the first packet may carry one or more pieces of indication information.
A: When the first packet carries one piece of indication information, the second node determines, based on the piece of indication information carried in the first packet, a network layer of a first set corresponding to the indication information. The second node determines network layers of a plurality of first sets based on a plurality of pieces of indication information carried in the first packet. Further, a network layer of one or more segment lists corresponding to the plurality of first sets is determined. Further, a network layer of one or more candidate paths corresponding to the one or more segment lists is determined based on the network layer of the one or more segment lists.
B: When the first packet carries a plurality of pieces of first indication information, the second node determines network layers of a plurality of first sets based on the plurality of pieces of indication information carried in the first packet. Further, a network layer of one or more segment lists corresponding to the plurality of first sets is determined based on the network layers of the plurality of first sets. Further, a network layer of one or more candidate paths corresponding to the one or more segment lists is determined based on the network layer of the one or more segment lists.

In another possible implementation, the first set includes one or more segments. The indication information indicates a network layer of a segment list. Specifically, one or more segments included in the first set belong to a same segment list. The indication information carried in the first packet indicates that a network layer of the segment list (that is, the first set) is the underlying network, or the indication information carried in the first packet indicates that the network layer of the segment list (that is, the first set) is not the underlying network. For example, the first set includes segment A, segment B, segment C, and segment D. Segment A, segment B, segment C, and segment D belong to segment list A. In this case, the indication information carried in the first packet indicates that a network layer of segment list A is an underlying network.

Further, the first packet may carry a plurality of pieces of indication information, and the plurality of pieces of indication information may indicate network layers of a plurality of segment lists.

It should be noted that a network layer of a segment list is determined by network layers of all segments included in the segment list. For example, when network layers of all segments included in a segment list are the underlying network, a network layer of the segment list is the underlying network. When network layers of some segments included in the segment list are the underlying network, and network layers of other segments included in the segment list are not the underlying network, the network layer of the segment list is a cross-layer network. When the network layers of all the segments included in the segment list are not the underlying network, the network layer of the segment list is a layer 3 network. For example, segment list A includes segment A, segment B, segment C, and segment D. Network layers of segment A and segment B are the underlying network, and network layers of segment C and segment D are the layer 3 network. In this case, a network layer of segment list A is the cross-layer network.

In still another possible implementation, the first set includes one or more segments. The indication information indicates a network layer of a candidate path. Specifically, one or more segments included in the first set belong to one or more segment lists. The one or more segment lists belong to a same candidate path. The indication information carried in the first packet indicates that a network layer of the candidate path (that is, the first set) is the underlying network, or the indication information carried in the first packet indicates that the network layer of the candidate path (that is, the first set) is not the underlying network.

Further, the first packet may carry a plurality of pieces of indication information, and the plurality of pieces of indication information may indicate network layers of a plurality of candidate paths.

It should be noted that a network layer of a candidate path is determined by network layers of all segment lists included in the candidate path. For example, when network layers of all segment lists included in a candidate path are the underlying network, a network layer of the candidate path is the underlying network. When network layers of some segment lists included in the candidate path are the underlying network, and network layers of other segment lists included in the candidate path are not the underlying network, the network layer of the candidate path is the cross-layer network. When the network layers of all the segment lists included in the candidate path are not the underlying network, the network layer of the candidate path is the layer 3 network. For example, candidate path A includes segment list A, segment list B, segment list C, and segment list D. Network layers of segment list A and segment list B are the underlying network, and network layers of segment list C and segment list D are the layer 3 network. In this case, a network layer of candidate path A is the cross-layer network.

The following specifically describes a plurality of implementations of the indication information. In this embodiment of this application, the indication information may indicate whether the network layer of the first set is an underlying network. The indication information may also specifically indicate that the network layer of the first set is a layer 1 network, a layer 2 network, a layer 3 network, or the like. Descriptions are as follows.

AA: When the indication information occupies one bit, the indication information indicates that the network layer of the first set is the underlying network, or the indication information indicates that the network layer of the first set is not the underlying network. For example, when the indication information is "1", the indication information indicates that the network layer of the first set is the underlying network; and when the indication information is "0", the indication information indicates that the network layer of the first set is not the underlying network.

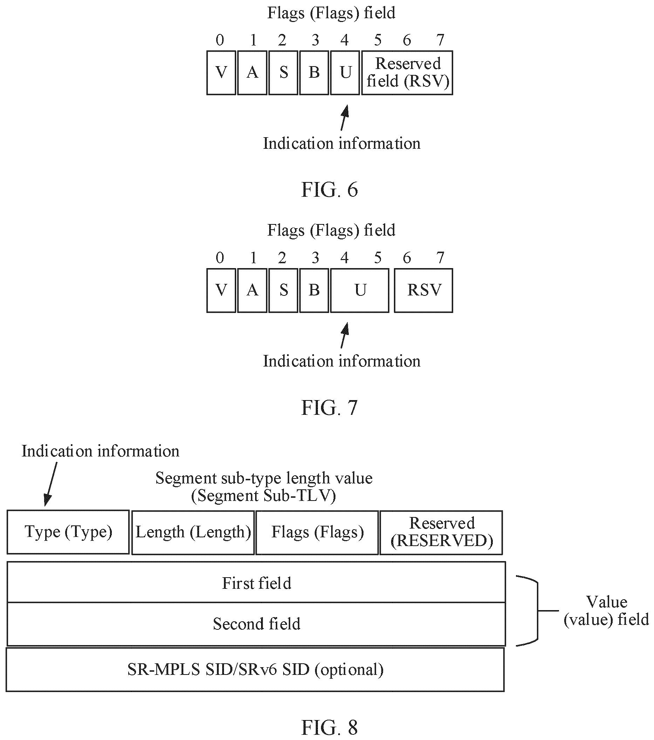

BB: When the indication information occupies a plurality of bits, the indication information may indicate a specific network layer of the first set. For example, the indication information indicates that the network layer of the first set is the layer 1 network, or the indication information indicates that the network layer of the first set is the layer 2 network, or the indication information indicates that the network layer of the first set is the layer 3 network. For example, as shown in FIG. 7, FIG. 7 is a diagram of indication information according to an embodiment of this application. The indication information occupies a 5^{th} bit and a 6^{th} bit in a flags (Flags) field of a Segment Sub-TLV. For example, as shown in Table 1.

**Table 1**

| Network layer of a first set | Indication information (occupying 2 bits) |
|---|---|
| Layer 1 network | 00 |
| Layer 2 network | 10 |
| Layer 3 network | 11 |

For another example, the indication information indicates that the network layer of the first set is the underlying network, or the indication information indicates that the network layer of the first set is the cross-layer network, or the indication information indicates that the network layer of the first set is the layer 3 network. In other words, the indication information indicates the network layer of the segment list (the segment list includes the first set); or the indication information indicates the network layer of the candidate path (the candidate path includes one or more segment lists, and the one or more segment lists include the first set). For example, as shown in Table 2.

**Table 2**

| Network layer of a first set | Indication information (occupying 2 bits) |
|---|---|
| Underlying network | 00 |
| Cross-layer network | 10 |
| Layer 3 network | 11 |

For still another example, the indication information indicates that the network layer of the first set is the layer 1 network, or the indication information indicates that the network layer of the first set is the layer 2 network, or the indication information indicates that the network layer of the first set is the layer 3 network, or the indication information indicates that the network layer of the first set is a layer 1.5 network, or the indication information indicates that the network layer of the first set is a layer 2.5 network. For example, as shown in Table 3.

**Table 3**

| Network layer of a first set | Indication information (occupying 3 bits) |
|---|---|
| Layer 1 network | 000 |
| Layer 1.5 network | 001 |
| Layer 2 network | 010 |
| Layer 2.5 network | 011 |
| Layer 3 network | 111 |

For another example, the network layer of the first set is determined by using a numerical value of the indication information. For example, when the numerical value of the indication information is 1, the network layer of the first set is the layer 1 network; when the numerical value of the indication information is 2, the network layer of the first set is the layer 2 network; and when the numerical value of the indication information is 3, the network layer of the first set is the layer 3 network.

It should be noted that a bit occupied by the indication information is not limited in this application.

That the first packet is a path computation element communication protocol PCEP packet, or the first packet is a border gateway protocol BGP packet is separately described below. It should be noted that an implementation of the first packet is not limited in this embodiment of this application, and the first packet may alternatively be a packet of another protocol, for example, Network Configuration Protocol (Network Configuration Protocol, NETCONF).
1. The first packet is the BGP packet.

Specifically, the indication information is located in a segment sub-type length value Segment Sub-TLV in the first packet. For ease of understanding, FIG. 4 is a diagram of a Segment Sub-TLV according to an embodiment of this application. The segment sub-type length value Segment Sub-TLV includes one or more of the following: a type (Type) field, a length (Length) field, a flags (Flags) field, a reserved (RESERVED) field, a segment routing multi-protocol label switching (SR-MPLS) segment identifier (SID) field, or an SRv6 SID.

1.1. A segment type (segment type) is extended, for example, the foregoing segment types: Type E, Type G, and/or Type J are extended.

In a possible implementation, the indication information of the first packet is located in the flags (Flags) field of the Segment Sub-TLV.

For the flags (Flags) field of the Segment Sub-TLV, refer to FIG. 5. FIG. 5 is a diagram of a Flags field of a Segment Sub-TLV. Currently, a length of the Flags field is 8 bits (bits), first four bits are used (that is, fields: V, A, S, and B in the figure), and last four bits are not used (that is, the last four bits are reserved fields (RSV)). Specifically, the indication information occupies unused bits (that is, the last four bits) in the flags (Flags) field of the Segment Sub-TLV.

For example, when the indication information occupies one bit, the indication information indicates that the network layer of the first set is the underlying network, or the indication information indicates that the network layer of the first set is not the underlying network. For example, as shown in FIG. 6, FIG. 6 is a diagram of indication information according to an embodiment of this application. The indication information (that is, a "U" field) occupies the 5^{th} bit in the flags (Flags) field of the Segment Sub-TLV.

For example, when the indication information occupies a plurality of bits, the indication information may indicate a specific network layer of the first set. For example, as shown in FIG. 7, FIG. 7 is a diagram of indication information according to an embodiment of this application. The indication information occupies the 5^{th} bit and the 6^{th} bit in the flags (Flags) field of the Segment Sub-TLV.

For another example, the indication information may occupy the 5^{th} bit in the Flags field, or the indication information may occupy the 6^{th} bit in the Flags field, or the indication information may occupy a 7^{th} bit in the Flags field, or the indication information may occupy an 8^{th} bit in the Flags field. For still another example, the indication information may occupy the 5^{th} bit and the 6^{th} bit in the Flags field, or the indication information may occupy the 6^{th} bit and the 7^{th} bit in the Flags field, or the indication information may occupy the 7^{th} bit and the 8^{th} bit in the Flags field.

In another possible implementation, the indication information of the first packet is located in the reserved (RESERVED) field of the Segment Sub-TLV. Specifically, when the indication information is located in the reserved (RESERVED) field of the Segment Sub-TLV, an implementation of the indication information is similar to that in the foregoing embodiment in which the indication information is located in the Flags field of the Segment Sub-TLV, and details are not described herein again.

1.2. Define a new segment type (segment type).

In a possible implementation, the indication information of the first packet is located in the type (Type) field of the Segment Sub-TLV.

Specifically, the network layer of the first set is indicated by using a numerical value of the type (Type) field (that is, a value of the Type field) of the Segment Sub-TLV. For example, when a value of indication information (that is, a Type field) is "XX", a network layer of a first set corresponding to the indication information is the underlying network; and when the value of the indication information (that is, the Type field) is "YY", the network layer of the first set corresponding to the indication information is not the underlying network.

Further, when the indication information indicates that the network layer of the first set is the underlying network, the first packet further includes a first field and a second field. The first field indicates an address of a headend of a transmission path corresponding to the first set, a type of the address includes IPv4 or IPv6, and the second field indicates the transmission path corresponding to the first set.

In other words, a node (that is, the headend of the transmission path corresponding to the first set) on which a SID of the first set takes effect is determined by using the first field. A transmission path that is in the node and that is related to the first set is determined by using the second field, for example, an interface corresponding to the first set, or a link corresponding to the first set, or a tunnel corresponding to the first set, or a channel corresponding to the first set.

Optionally, the first field and the second field may be located in a value (value) field of the Segment Sub-TLV. For ease of understanding, FIG. 8 is another diagram of a Segment Sub-TLV according to an embodiment of this application.

2. The first packet is the path computation element communication protocol PCEP packet.

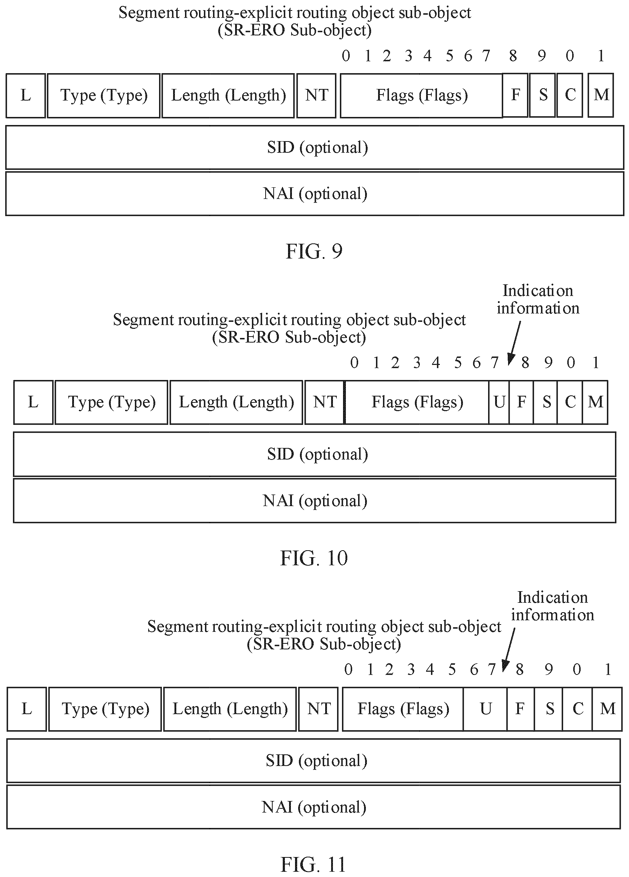

Specifically, the indication information is located in a segment routing-explicit routing object sub-object SR-ERO sub-Object of the first packet. For ease of understanding, FIG. 9 is a diagram of an SR-ERO sub-Object according to an embodiment of this application. The SR-ERO sub-Object includes: an L field, a type (Type) field, a length (Length) field, a node or adjacency identifier type (NAI type, NT) field, a flags (Flags) field, a reserved (RESERVED) field, a SID (optional field), and a node or adjacency identifier (Node or Adjacency Identifier, NAI) (the NAI is an optional field).

2.1. A segment type (segment type) is extended, for example, the foregoing segment types: Type E, Type G, and/or Type J are extended.

In a possible implementation, the indication information of the first packet is located in the flags (Flags) field of the SR-ERO sub-Object.

The flags (Flags) field of the SR-ERO sub-Object has 12 bits in total, where the Flags field includes occupied fields: F, S, C, and M. The indication information provided in this embodiment of this application may be located in unused bits in the Flags field.

For example, when the indication information occupies one bit, the indication information indicates that the network layer of the first set is the underlying network, or the indication information indicates that the network layer of the first set is not the underlying network. For example, as shown in FIG. 10, FIG. 10 is another diagram of indication information according to an embodiment of this application. The indication information provided in this embodiment of this application occupies an 8^{th} bit of the Flags field.

For example, when the indication information occupies a plurality of bits, the indication information may indicate a specific network layer of the first set. For example, as shown in FIG. 11, FIG. 11 is still another diagram of indication information according to an embodiment of this application. The indication information provided in this embodiment of this application occupies a 7^{th} bit and the 8^{th} bit of the Flags field.

For another example, the indication information may occupy another unused bit (also referred to as an unoccupied bit) in the Flags field. For example, the indication information may occupy a 1^{st} bit in the Flags field, or the indication information may occupy a 2^{nd} bit in the Flags field, or the indication information may occupy a 3^{rd} bit in the Flags field. For still another example, the indication information may occupy the 1^{st} bit and the 2^{nd} bit in the Flags field, or the indication information may occupy the 2^{nd} bit and the 3^{rd} bit in the Flags field, or the indication information may occupy the 3^{rd} bit and a 4^{th} bit in the Flags field. This is not limited in this application.

In another possible implementation, the indication information of the first packet is located in an added field of the SR-ERO sub-Object. Specifically, when the indication information is located in the added field of the SR-ERO sub-Object, an implementation of the indication information is similar to that in the foregoing embodiment in which the indication information is located in the Flags field of the SR-ERO sub-Object, and details are not described herein again.

2.2. Define a new segment type (segment type).

In a possible implementation, the indication information of the first packet is located in the type (Type) field of the SR-ERO sub-Object.

Specifically, the network layer of the first set is indicated by using a numerical value of the type (Type) field (that is, a value of the Type field) of the SR-ERO sub-Object. For example, when a value of indication information (that is, a Type field) is "XX", a network layer of a first set corresponding to the indication information is the underlying network; and when the value of the indication information (that is, the Type field) is "YY", the network layer of the first set corresponding to the indication information is not the underlying network.

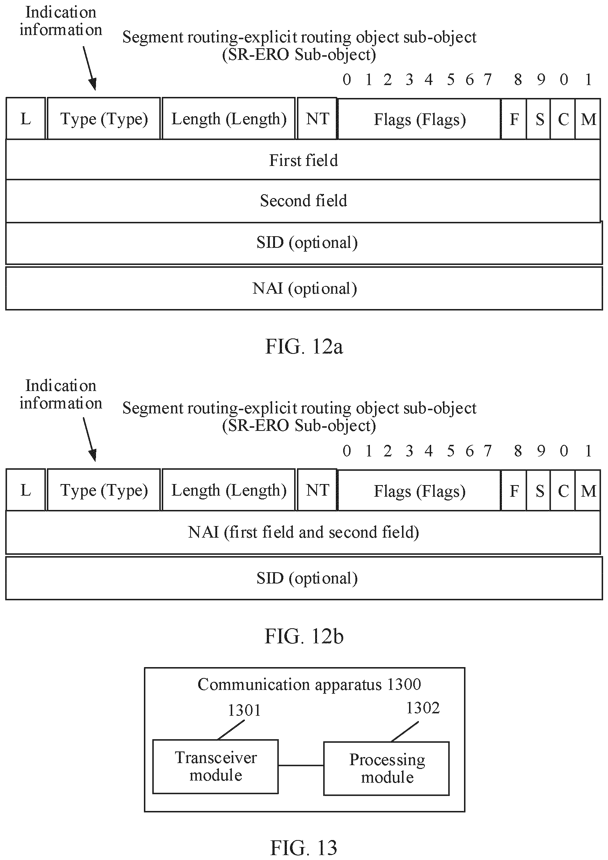

Further, when the indication information indicates that the network layer of the first set is the underlying network, the first packet further includes a first field and a second field. The first field indicates an address of a headend of a transmission path corresponding to the first set, a type of the address includes IPv4 or IPv6, and the second field indicates the transmission path corresponding to the first set. For ease of understanding, FIG. 12a is yet another diagram of indication information according to an embodiment of this application.

Optionally, the first field and the second field may be located in the NAI field of the SR-ERO sub-Object. In this case, the NAI field is used as a mandatory field. For ease of understanding, FIG. 12b is another diagram of an SR-ERO sub-Object according to an embodiment of this application. For example, when a value of an NT field in the SR-ERO sub-Object is "XX", a format of the NAI field in the SR-ERO sub-Object is indicated as IPv4, the first field (in the NAI field) indicates that the address of the headend (node address) of the transmission path corresponding to the first set is "aaaa", and the second field (in the NAI field) indicates that an identifier of the transmission path corresponding to the first set is "cccc", where "cccc" is an identifier of an underlying virtual link.

It may be understood that the indication information provided in this embodiment of this application may be further located in an SRv6-ERO sub-Object. An implementation of the SRv6-ERO sub-Object is similar to the implementation of the SR-ERO sub-Object, and details are not described herein again. For another example, when a value of an NT field in the SRv6-ERO sub-Object is "YY", a format of an NAI field in the SRv6-ERO sub-Object is indicated as IPv6, a first field (in the NAI field) indicates that the address of the headend (node address) of the transmission path corresponding to the first set is "bbbb", and a second field (in the NAI field) indicates that an identifier of the transmission path corresponding to the first set is "dddd", where "dddd" is an identifier of an underlying virtual link.

202: The second node determines the network layer of the first set based on the first packet.

In this embodiment, after receiving the first packet, the second node determines the network layer of the first set based on the first packet.

In a possible implementation, when the first set includes one segment, the second node determines the network layer of the first set based on the indication information in the first packet. In other words, the second node determines a network layer of the segment based on the indication information in the first packet.

Further, when a segment list corresponding to the first set includes only one segment, the second node determines a network layer of the segment list based on the network layer of the first set. When the segment list corresponding to the first set includes a plurality of segments, the second node determines the network layer of the segment list based on network layers of all segments in the segment list.

Further, the second node determines a network layer of one or more first sets based on one or more pieces of indication information, and then determines a network layer of one or more corresponding segment lists based on the network layer of the one or more first sets. The one or more pieces of indication information may be carried in a same first packet, or may be carried in a plurality of first packets. This is not limited in this embodiment of this application.

Further, when a candidate path corresponding to the segment list includes only one segment list, the second node determines a network layer of the candidate path based on a network layer of the segment list. When the candidate path includes a plurality of segment lists, the second node determines the network layer of the candidate path based on network layers of all segment lists in the candidate path.

Further, the second node determines a network layer of one or more first sets based on one or more pieces of indication information, and then determines a network layer of one or more corresponding segment lists based on the network layer of the one or more first sets. Further, a network layer of one or more corresponding candidate paths is determined based on the network layer of the one or more segment lists. The one or more pieces of indication information may be carried in a same first packet, or may be carried in a plurality of first packets. This is not limited in this embodiment of this application.

It should be noted that a network layer of a segment list is determined by network layers of all segments included in the segment list.

In another possible implementation, when the first set includes one or more segments, that is, the indication information of the first packet may indicate a network layer of a segment, or may indicate a network layer of a segment list (all segments in the segment list), or may indicate a network layer of a candidate path (all segment lists in the candidate path and all segments in each of the segment lists). Details are described below.

When all segments included in a segment list are equal to the first set, that the indication information of the first packet indicates the network layer of the first set is equal to that the indication information of the first packet indicates a network layer of the segment list. In other words, the second node directly determines indication information of the segment list based on the indication information of the first packet.

It may be understood that the indication information of the first packet may further indicate network layers of a plurality of segment lists. This is not limited in this embodiment of this application.

When all segments included in a candidate path (that is, all segment lists included in the candidate path and all segments included in each of the segment lists) are equal to the first set, that the indication information of the first packet indicates the network layer of the first set is equal to that the indication information of the first packet indicates a network layer of the candidate path. In other words, the second node directly determines indication information of the candidate path based on the indication information of the first packet.

It may be understood that the indication information of the first packet may further indicate network layers of a plurality of candidate paths. This is not limited in this embodiment of this application.

It should be noted that a network layer of a candidate path is determined by network layers of all segment lists included in the candidate path. For example, when network layers of all segment lists included in a candidate path are the underlying network, a network layer of the candidate path is the underlying network. When network layers of some segment lists included in the candidate path are the underlying network, and network layers of other segment lists included in the candidate path are not the underlying network, the network layer of the candidate path is the cross-layer network. When the network layers of all the segment lists included in the candidate path are not the underlying network, the network layer of the candidate path is the layer 3 network. For example, candidate path A includes segment list A, segment list B, segment list C, and segment list D. Network layers of segment list A and segment list B are the underlying network, and network layers of segment list C and segment list D are the layer 3 network. In this case, a network layer of candidate path A is the cross-layer network.

In a possible implementation, the second node determines a network layer of a segment list based on the indication information in the first packet, where the one or more segments included in the first set belong to the segment list. A network layer of a segment list is determined by network layers of all segments included in the segment list. An example in which all segments included in a segment list are equal to the first set is used for description.

In a possible implementation, when the second node determines, based on the indication information carried in the first packet, that the network layer of the first set is the underlying network, the second node determines that the network layer of the segment list is the underlying network; when the second node determines, based on the indication information carried in the first packet, that network layers of some segments in the first set are the underlying network, and network layers of some segments in the first set are the underlying network, the second node determines that the network layer corresponding to the segment list is a cross-layer network, where the cross-layer network includes a layer 3 network and the underlying network; and when the second node determines, based on the indication information carried in the first packet, that the network layer of the first set is the layer 3 network, the second node determines that the network layer of the segment list is the layer 3 network.

For example, segment list A includes segment A, segment B, segment C, and segment D. Network layers of segment A and segment B are the underlying network, and network layers of segment C and segment D are the layer 3 network. In this case, a network layer of segment list A is the cross-layer network.

In another possible implementation, when the second node determines, based on the indication information carried in the first packet, that the network layer of the first set is a layer 1 network, the second node determines that the network layer of the segment list is the layer 1 network; when the second node determines, based on the indication information carried in the first packet, that the network layer of the first set is a layer 2 network, the second node determines that the network layer of the segment list is the layer 2 network; and when the second node determines, based on the indication information carried in the first packet, that the network layer of the first set is a layer 3 network, the second node determines that the network layer of the segment list is the layer 3 network. Further, when the second node determines, based on the indication information carried in the first packet, that the network layer of the first set is a layer 1.5 network, the second node determines that the network layer of the segment list is the layer 1.5 network; and when the second node determines, based on the indication information carried in the first packet, that the network layer of the first set is a layer 2.5 network, the second node determines that the network layer of the segment list is the layer 2.5 network.

In a possible implementation, the second node determines a network layer of a candidate path based on the network layer of the segment list, where the candidate path includes the segment list. A network layer of a candidate path is determined by network layers of all segment lists included in the candidate path. An example in which all segments in all segment lists included in a candidate path are equal to the first set is used for description.

In a possible implementation, when the second node determines, based on the indication information carried in the first packet, that the network layer of the first set is the underlying network, the second node determines that the network layer of the candidate path is the underlying network; when the second node determines, based on the indication information carried in the first packet, that network layers of some segment lists in the first set are the underlying network, and network layers of some segment lists in the first set are the underlying network, the second node determines that the network layer corresponding to the candidate path is a cross-layer network, where the cross-layer network includes a layer 3 network and the underlying network; and when the second node determines, based on the indication information carried in the first packet, that the network layer of the first set is the layer 3 network, the second node determines that the network layer of the candidate path is the layer 3 network.

In another possible implementation, when the second node determines, based on the indication information carried in the first packet, that the network layer of the first set is a layer 1 network, the second node determines that the network layer of the candidate path is the layer 1 network; when the second node determines, based on the indication information carried in the first packet, that the network layer of the first set is a layer 2 network, the second node determines that the network layer of the candidate path is the layer 2 network; and when the second node determines, based on the indication information carried in the first packet, that the network layer of the first set is a layer 3 network, the second node determines that the network layer of the candidate path is the layer 3 network. Further, when the second node determines, based on the indication information carried in the first packet, that the network layer of the first set is a layer 1.5 network, the second node determines that the network layer of the candidate path is the layer 1.5 network; and when the second node determines, based on the indication information carried in the first packet, that the network layer of the first set is a layer 2.5 network, the second node determines that the network layer of the candidate path is the layer 2.5 network.

203: The second node determines a routing policy based on the network layer of the first set.

Step 203 is an optional step.

Optionally, after determining the network layer of the first set, the second node determines the routing policy. The routing policy may indicate packet forwarding, that is, the second node controls, according to the routing policy, packet forwarding of the second node. In a possible implementation, for a service having a low latency requirement, the underlying network is preferred for a related packet of the service. For example, the second node determines that the network layer of segment list A is the underlying network, and the network layer of segment list B is the layer 3 network. The second node needs to process a related packet of service A, and service A has a characteristic of a low latency requirement. Therefore, the second node selects segment list A as a packet forwarding path of service A.

In another possible implementation, for a service having no latency requirement or a service having a high latency requirement, the second node preferentially selects a transmission path of the layer 3 network to forward a packet of the service, to reserve a transmission path resource of the underlying network. The transmission path resource of the underlying network is provided for a low latency service, to ensure that a latency requirement of the low latency service is met.

Optionally, after the second node determines the network layer of the first set in step 202, the second node may check the first set. Specifically, the second node determines the network layer of the first set based on the indication information of the first packet, and the second node detects an actual network layer of the first set. Then, the second node checks whether the network layer indicated by the indication information is consistent with the actually detected network layer. Validity check is performed on the path by using the foregoing method.

In this embodiment of this application, indication information is added to a first packet, so that the first packet may indicate a network layer of a segment. The second node determines, based on the indication information, a network layer of a first set corresponding to the indication information, so that the second node may select, based on the network layer of the first set, a packet forwarding path. This simplifies network configuration and meets personalized network configuration requirements. This meets service requirements and improves communication performance.

The foregoing mainly describes the solutions provided in embodiments of this application from a perspective of methods. It may be understood that, to implement the foregoing functions, the network device includes a corresponding hardware structure and/or software module for implementing each function. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into function modules according to the foregoing method example. For example, various function modules corresponding to various functions may be obtained through division, or two or more functions are integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

The following describes a communication apparatus in embodiments of this application. The communication apparatus described below has any function of the first node or the second node in the foregoing method embodiments.

FIG. 13 is a diagram of a structure of a communication apparatus 1300 according to an embodiment of this application. As shown in FIG. 13, the communication apparatus 1300 includes a transceiver module 1301, configured to perform step 201, and a processing module 1302, configured to perform step 202 and step 203.

The communication apparatus 1300 may be corresponding to the first node and the second node in the foregoing method embodiments. The units in the communication apparatus 1300 and the foregoing other operations and/or functions are respectively used to implement various steps and methods implemented by the first node or the second node in the method embodiments. For specific details, refer to the foregoing method embodiments. For brevity, details are not described herein again.

When the communication apparatus 1300 executes the foregoing method embodiments, division into the foregoing function modules is merely used as an example for description. During actual application, the foregoing functions may be allocated to different function modules for implementation according to a requirement. In other words, an internal structure of the communication apparatus 1300 is divided into different function modules, to implement all or some of the functions described above. In addition, the communication apparatus 1300 provided in the foregoing embodiment and the method in the embodiment corresponding to FIG. 2 pertain to a same concept. For a specific implementation process thereof, refer to the foregoing method embodiments. Details are not described herein again.

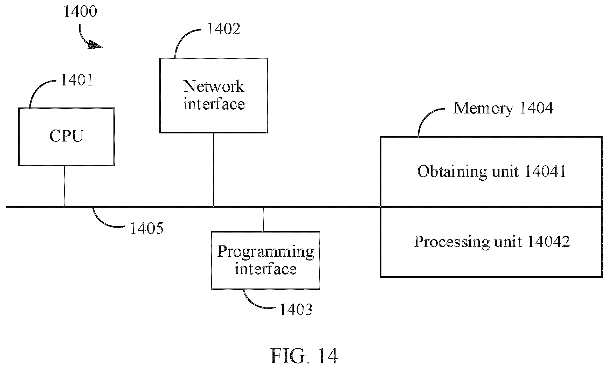

To implement the foregoing embodiments, this application further provides a communication apparatus. FIG. 14 is a diagram of a structure of a communication apparatus 1400 according to an embodiment of this application.

Although a communication apparatus 1400 in FIG. 14 shows some specific features, a person skilled in the art may be aware, from embodiments of this application, that, for brevity, FIG. 14 does not show various other features, to avoid confusing more related aspects of implementations disclosed in embodiments of this application. Therefore, for example, in some implementations, the communication apparatus 1400 includes one or more processing units (for example, CPUs) 1401, a network interface 1402, a programming interface 1403, a memory 1404, and one or more communication buses 1405 configured to interconnect various components. In some other implementations, some functional components or units may be omitted in or added to the communication apparatus 1400 based on the foregoing example.

In some implementations, the network interface 1402 is configured to connect to one or more other communication apparatuses/servers in a network system. In some implementations, the communication bus 1405 includes a circuit that interconnects and controls communication between system components. The memory 1404 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1404 may include a volatile memory. The volatile memory may be a random access memory (random access memory, RAM), and is used as an external cache.

In some implementations, the memory 1404 or a non-transitory computer-readable storage medium of the memory 1404 stores the following programs, modules, and data structures, or subsets thereof, for example, includes a transceiver unit (not shown in the figure), an obtaining unit 14041, and a processing unit 14042.

In a possible embodiment, the communication apparatus 1400 may have any function of the first node or the second node in the method embodiment corresponding to FIG. 2.

It should be understood that the communication apparatus 1400 is corresponding to the first node or the second node in the foregoing method embodiments, and the modules in the communication apparatus 1400 and the foregoing other operations and/or functions are respectively used to implement various steps and methods implemented by the first node or the second node in the foregoing method embodiments. For specific details, refer to the foregoing method embodiment corresponding to FIG. 2. For brevity, details are not described herein again.

It should be understood that, in this application, the network interface 1402 of the communication apparatus 1400 may perform data receiving and sending operations, or a processor may invoke program code in the memory, and implement functions of the transceiver unit in cooperation with the network interface 1402 when required.

In various implementations, the communication apparatus 1400 is configured to perform the packet control method provided in embodiments of this application, for example, perform the packet control method corresponding to the embodiment shown in FIG. 2.

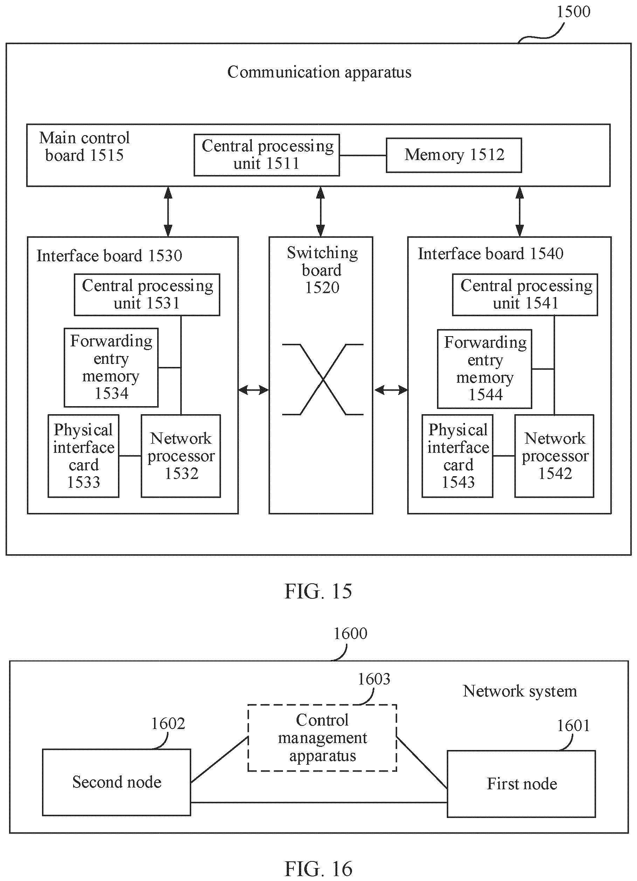

A specific structure of the communication apparatus in FIG. 14 in this application may be shown in FIG. 15.

FIG. 15 is a diagram of a structure of a communication apparatus 1500 according to an embodiment of this application. The communication apparatus 1500 includes a main control board 1515 and an interface board 1530.

The main control board 1515 is also referred to as a main processing unit (main processing unit, MPU) or a route processor (route processor). The main control board 1515 is configured to control and manage components in the communication apparatus 1500, including functions of route calculation, device management, device maintenance, and protocol processing. The main control board 1515 includes a central processing unit 1511 and a memory 1512.

The interface board 1530 is also referred to as a line processing unit (line processing unit, LPU), a line card (line card), or a service board. The interface board 1530 is configured to provide various service interfaces and forward a data packet. The service interface includes but is not limited to an Ethernet interface and a POS (Packet over SONET/SDH) interface. The interface board 1530 includes a central processing unit 1531, a network processor 1532, a forwarding entry memory 1534, and a physical interface card (physical interface card, PIC) 1533.

The central processing unit 1531 on the interface board 1530 is configured to control and manage the interface board 1530, and communicate with the central processing unit 1511 on the main control board 1515.

The network processor 1532 is configured to forward a packet. A form of the network processor 1532 may be a forwarding chip.

The physical interface card 1533 is configured to implement a physical layer interconnection function, so that original traffic enters the interface board 1530 from the physical interface card 1533, and a processed packet is sent out from the physical interface card 1533. The physical interface card 1533 includes at least one physical interface. The physical interface is also referred to as a physical port, and the physical interface may be a flexible ethernet (Flexible Ethernet, FlexE) physical interface. The physical interface card 1533, also referred to as a subcard, may be installed on the interface board 1530, and is responsible for converting an optical/electrical signal into a packet, performing validity check on the packet, and forwarding the packet to the network processor 1532 for processing. In some embodiments, the central processing unit 1531 of the interface board 1530 may further perform a function of the network processor 1532, for example, implement software forwarding based on a general-purpose CPU, so that the interface board 1530 does not need the network processor 1532.

Optionally, the communication apparatus 1500 includes a plurality of interface boards. For example, the communication apparatus 1500 further includes an interface board 1540. The interface board 1540 includes a central processing unit 1541, a network processor 1542, a forwarding entry memory 1544, and a physical interface card 1543.

Optionally, the communication apparatus 1500 further includes a switching board 1520. The switching board 1520 may also be referred to as a switch fabric unit (switch fabric unit, SFU). When the communication apparatus has a plurality of interface boards 1530, the switching board 1520 is configured to complete data exchange between the interface boards. For example, the interface board 1530 and the interface board 1540 may communicate with each other via the switching board 1520.

The main control board 1515 is coupled to the interface board. For example, the main control board 1515, the interface board 1530, the interface board 1540, and the switching board 1520 are connected to each other through a system bus and/or a system backplane to implement interworking. In a possible implementation, an inter-process communication (inter-process communication, IPC) protocol channel is established between the main control board 1515 and the interface board 1530, and the main control board 1515 and the interface board 1530 communicate with each other through the IPC channel.

Logically, the communication apparatus 1500 includes a control plane and a forwarding plane. The control plane includes the main control board 1515 and the central processing unit 1531. The forwarding plane includes components used for forwarding, for example, the forwarding entry memory 1534, the physical interface card 1533, and the network processor 1532. The control plane performs functions such as route advertising, generating a forwarding table, processing signaling and protocol packets, and configuring and maintaining a status of a device. The control plane delivers the generated forwarding table to the forwarding plane. On the forwarding plane, based on the forwarding table delivered by the control plane, the network processor 1532 looks up the table and forwards a packet received by the physical interface card 1533. The forwarding table delivered by the control plane may be stored in the forwarding entry memory 1534. In some embodiments, the control plane and the forwarding plane may be completely separated, and are not on a same device.

It should be understood that the transceiver unit in the communication apparatus 1400 may be equivalent to the physical interface card 1533 or the physical interface card 1543 in the communication apparatus 1500, and the obtaining unit 14041 and the processing unit 14042 in the communication apparatus 1400 may be equivalent to the central processing unit 1511 or the central processing unit 1531 in the communication apparatus 1500, or may be equivalent to program code or instructions stored in the memory 1512.

It should be understood that, in this embodiment of this application, an operation on the interface board 1540 is consistent with an operation on the interface board 1530. For brevity, details are not described again. It should be understood that the communication apparatus 1500 in this embodiment may correspond to the first node or the second node in the foregoing method embodiments. The main control board 1515, the interface board 1530, and/or the interface board 1540 in the communication apparatus 1500 may implement functions and/or various steps implemented by the first node or the second node in the foregoing method embodiments. For brevity, details are not described herein again.

It should be noted that there may be one or more main control boards, and when there are a plurality of main control boards, a primary main control board and a secondary main control board may be included. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, and exchange data between a plurality of interface boards through the switching board, to provide a large-capacity data exchange and processing capability. Optionally, the form of the communication apparatus may alternatively be only one board, to be specific, there is no switching board, and functions of the interface board and the main control board are integrated on the board. In this case, a central processing unit on the interface board and a central processing unit on the main control board may be combined into one central processing unit on the board, to implement functions obtained after the two are superimposed. Which architecture is specifically used depends on a specific networking deployment scenario. This is not uniquely limited herein.

In some possible embodiments, the communication apparatus may be implemented as a virtualization device. The virtualization device may be a virtual machine (virtual machine, VM), a virtual router, or a virtual switch that runs a program for sending a packet. The virtualization device is deployed on a hardware device (for example, a physical server). For example, the communication apparatus may be implemented based on a general-purpose physical server in combination with a network functions virtualization (network functions virtualization, NFV) technology.

It should be understood that the communication apparatuses in the foregoing product forms separately have any function of the first node or the second node in the foregoing method embodiments. Details are not described herein again.

An embodiment of this application further provides a computer-readable storage medium, including instructions. When the instructions are run on a computer, the computer controls a network apparatus to perform any implementation described in the foregoing method embodiments.

An embodiment of this application further provides a computer program product. The computer program product includes computer program code. When the computer program code is run on a computer, the computer is enabled to perform any implementation described in the foregoing method embodiments.

Further, an embodiment of this application further provides a computer program product. When the computer program product runs on a communication apparatus, the communication apparatus is enabled to perform the method performed by the first node or the second node in the method embodiment corresponding to FIG. 2.

An embodiment of this application further provides a chip system, including a processor and an interface circuit. The interface circuit is configured to receive instructions and transmit the instructions to the processor. The processor is configured to implement the method according to any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method according to any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

FIG. 16 is a diagram of a network system 1600 according to an embodiment of this application. The network system 1600 includes a first node 1601 and a second node 1602. The first node 1601 and the second node 1602 may be, for example, physical devices such as a router, a switch, or a gateway, or may be virtual devices that support route advertisement and packet forwarding. Specific types of the first node 1601 and the second node 1602 are not limited in this embodiment.

Optionally, the network system 1600 further includes a control management apparatus 1603, and the control management apparatus 1603 may be a server that manages the first node 1601 and the second node 1602. Optionally, the first node 1601 may be a communication apparatus 1300, a communication apparatus 1400, or a communication apparatus 1500. Optionally, the second node 1602 may be a communication apparatus 1300, a communication apparatus 1400, or a communication apparatus 1500. Optionally, the control management apparatus 1603 may be a communication apparatus 1300, a communication apparatus 1400, or a communication apparatus 1500.

The communication apparatuses in the foregoing product forms separately have any function of the first node or the second node in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

## Claims

1. A packet control method, comprising:
sending, by a first node, a first packet to a second node, wherein the first packet carries indication information;
the first packet corresponds to one or more segment lists, wherein each segment list corresponds to one or more segments segment;
the indication information indicates that a network layer of a first set is an underlying network, or the indication information indicates that the network layer of the first set is not an underlying network; and
the underlying network is a network below a layer 3 network, and the first set comprises one or more segments.

2. The method according to claim 1, wherein the first set comprises one segment.

3. The method according to claim 1, wherein the first set comprises one or more segments, and the one or more segments belong to a same segment list; and
that the indication information indicates that a network layer of a first set is an underlying network, or the indication information indicates that the network layer of the first set is not an underlying network comprises:
the indication information specifically indicates that a network layer of the segment list is the underlying network; or
the indication information indicates that the network layer of the segment list is not the underlying network.

4. The method according to claim 1, wherein the first set comprises one or more segments, the one or more segments belong to one or more segment lists, and the one or more segment lists belong to a same candidate path; and
that the indication information indicates that a network layer of a first set is an underlying network, or the indication information indicates that the network layer of the first set is not an underlying network comprises:
the indication information indicates that a network layer of the candidate path is the underlying network; or
the indication information indicates that the network layer of the candidate path is not the underlying network.

5. The method according to any one of claims 1 to 4, wherein the first packet is a path computation element communication protocol PCEP packet, or the first packet is a border gateway protocol BGP packet.

6. The method according to claim 5, wherein when the first packet is the border gateway protocol BGP packet, the indication information is located in a segment sub-type length value Segment Sub-TLV in the first packet.

7. The method according to claim 6, wherein the indication information is located in a flags Flags field of the Segment Sub-TLV.

8. The method according to claim 5, wherein when the first packet is the path computation element communication protocol PCEP packet, the indication information is located in a segment routing-explicit routing object sub-object SR-ERO sub-Object of the first packet.

9. The method according to claim 8, wherein the indication information is located in a flags Flags field of the SR-ERO sub-Object.

10. The method according to claim 5, wherein when the first packet is the border gateway protocol BGP packet, the indication information is located in a type Type field of a segment sub-type length value Segment Sub-TLV in the first packet.

11. The method according to claim 5, wherein when the first packet is the path computation element communication protocol PCEP packet, the indication information is located in a node or adjacency identifier type NT field of the first packet.

12. The method according to claim 10 or 11, wherein when the indication information indicates that the network layer corresponding to the first set is the underlying network, the first packet further comprises a first field and a second field, wherein
the first field indicates an address of a headend of a transmission path corresponding to the first set, and a type of the address comprises IPv4 or IPv6; and
the second field indicates the transmission path corresponding to the first set.

13. The method according to claim 12, wherein the transmission path corresponding to the first set comprises an interface corresponding to the first set, a link corresponding to the first set, a tunnel corresponding to the first set, or a channel corresponding to the first set.

14. The method according to claim 12 or 13, wherein the first field and the second field are located in a segment routing-explicit routing object sub-object SR-ERO sub-Object of the first packet.

15. The method according to claim 14, wherein the first field and the second field are located in a node or adjacency identifier NAI field of the SR-ERO sub-Object.

16. The method according to claim 12 or 13, wherein the first field and the second field are located in a value value field of the segment sub-type length value Segment Sub-TLV in the first packet.

17. The method according to any one of claims 1 to 16, wherein that the indication information indicates that a network layer of a first set is an underlying network comprises:
the indication information indicates that the network layer of the first set is a layer 2 network; or
the indication information indicates that the network layer of the first set is a layer 1 network; or
the indication information indicates that the network layer of the first set is a layer 1.5 network; or
the indication information indicates that the network layer of the first set is a layer 2.5 network.

18. The method according to any one of claims 1 to 17, wherein
that the indication information indicates that the network layer of the first set is not an underlying network comprises:
the indication information indicates that the network layer of the first set is a layer 3 network.

19. A packet control method, comprising:
receiving, by a second node, a first packet from a first node, wherein
the first packet corresponds to one or more segment lists, each segment list corresponds to one or more segments segment, the first packet carries indication information, the indication information indicates that a network layer of a first set is an underlying network, or the indication information indicates that the network layer of the first set is not an underlying network, and the underlying network is a network below a layer 3 network; and
determining, by the second node, the network layer of the first set based on the first packet, wherein the first set comprises one or more segments.

20. The method according to claim 19, wherein the determining, by the second node, the network layer of the first set based on the first packet comprises:
determining, by the second node, a network layer of the segment list based on the indication information in the first packet, wherein
the one or more segments comprised in the first set belong to the segment list.

21. The method according to claim 20, wherein the method further comprises:
determining, by the second node, a network layer of a candidate path based on the network layer of the segment list, wherein
the candidate path comprises the segment list.

22. The method according to claim 20 or 21, wherein the determining, by the second node, a network layer of the segment list based on the indication information in the first packet comprises:
when the second node determines, based on the indication information carried in the first packet, that the network layer of the first set is the underlying network, determining, by the second node, that the network layer of the segment list is the underlying network;
when the second node determines, based on the indication information carried in the first packet, that network layers of some segments in the first set are the underlying network, and network layers of some segments in the first set are the underlying network, determining, by the second node, that the network layer corresponding to the segment list is a cross-layer network, wherein the cross-layer network comprises a layer 3 network and the underlying network; and
when the second node determines, based on the indication information carried in the first packet, that the network layer of the first set is the layer 3 network, determining, by the second node, that the network layer of the segment list is the layer 3 network.

23. The method according to claim 20 or 21, wherein the determining, by the second node, a network layer of the segment list based on one or more pieces of the indication information in the first packet comprises:
when the second node determines, based on the indication information carried in the first packet, that the network layer of the first set is a layer 1 network, determining, by the second node, that the network layer of the segment list is the layer 1 network;
when the second node determines, based on the indication information carried in the first packet, that the network layer of the first set is a layer 2 network, determining, by the second node, that the network layer of the segment list is the layer 2 network; and
when the second node determines, based on the indication information carried in the first packet, that the network layer of the first set is a layer 3 network, determining, by the second node, that the network layer of the segment list is the layer 3 network.

24. The method according to any one of claims 21 to 23, wherein the determining, by the second node, a network layer of a candidate path based on the network layer of the segment list comprises:
when network layers of all of the segment lists comprised in the candidate path are the underlying network, determining, by the second node, that the network layer of the candidate path is the underlying network;
when network layers of some of the segment lists comprised in the candidate path are the underlying network, and some of the segment lists comprised in the candidate path are not the underlying network, determining, by the second node, that the network layer of the candidate path is the cross-layer network, wherein the cross-layer network comprises the layer 3 network and the underlying network; and
when the network layers of all of the segment lists comprised in the candidate path are not the underlying network, determining, by the second node, that the network layer of the candidate path is the layer 3 network.

25. The method according to any one of claims 21 to 23, wherein the determining, by the second node, a network layer of a candidate path based on the network layer of the segment list comprises:
when network layers of all of the segment lists comprised in the candidate path are the layer 1 network, determining, by the second node, that the network layer of the candidate path is the layer 1 network;
when the network layers of all of the segment lists comprised in the candidate path are the layer 2 network, determining, by the second node, that the network layer of the candidate path is the layer 2 network; and
when the network layers of all of the segment lists comprised in the candidate path are the layer 3 network, determining, by the second node, that the network layer of the candidate path is the layer 3 network.

26. The method according to any one of claims 19 to 25, wherein the method further comprises:
determining, by the second node, a routing policy based on the network layer of the first set; and
controlling, by the second node, packet forwarding of the second node according to the routing policy.

27. The method according to any one of claims 19 to 26, wherein the method further comprises:
checking, by the second node, the first set based on the network layer of the first set, to determine whether an actual network layer of the first set is consistent with a network layer indicated by the indication information.

28. A communication apparatus, comprising:
a communication interface; and
a processor connected to the communication interface, wherein based on the communication interface and the processor, the communication apparatus is enabled to perform the method according to any one of claims 1 to 18 or any one of claims 19 to 27.

29. A communication system, wherein the communication system comprises a communication apparatus, and the communication apparatus is configured to perform the method according to any one of claims 1 to 18 or any one of claims 19 to 27.

30. A computer-readable storage medium, comprising instructions, wherein when the instructions are executed by a processor, the method according to any one of claims 1 to 18 or any one of claims 19 to 27 is implemented.

31. A computer program product, comprising a program, wherein when the program is executed by a processor, the method according to any one of claims 1 to 18 or any one of claims 19 to 27 is implemented.
